(19) Europäisches Patentamt
European Patent Office
Office européen des brevets

(11) Numéro de publication: 0 152 541
B1

(12) **FASCICULE DE BREVET EUROPÉEN**

(45) Date de publication du fascicule du brevet: **10.05.89**

(51) Int. Cl.⁴: **G 01 N 27/30**

(21) Numéro de dépôt: **84113331.7**

(22) Date de dépôt: **06.11.84**

(54) **Tête de dosage électrochimique à électrodes sérigraphiées.**

(30) Priorité: **08.11.83 FR 8317717**

(43) Date de publication de la demande: **28.08.85 Bulletin 85/35**

(45) Mention de la délivrance du brevet: **10.05.89 Bulletin 89/19**

(84) Etats contractants désignés: **DE FR GB IT SE**

(56) Documents cité:
**CH-A-543 091**
**FR-A-2 335 842**
**GB-A-1 151 298**
**US-A-3 929 609**

**O.R. ZABORSKY: "Immobilized enzymes", septembre 1974, pages 12-18, C.R.C. Press, Cleveland, US;**

(73) Titulaire: **COMPAGNIE GENERALE D'ELECTRICITE Société anonyme dite:, 54, rue La Boétie, F-75382 Paris Cédex 08 (FR)**

(72) Inventeur: **Michel, Marie- Claude, 4 Résidence Les Hauts de Villebon, F-91120 Villebon Sur Yvette (FR)**
Inventeur: **Renard, Jean- Claude, 2, rue Molière, F-91380 Chilly Mazarin (FR)**

(74) Mandataire: **Weinmiller, Jürgen, Lennéstrasse 9 Postfach 24, D-8133 Feldafing (DE)**

**EP 0 152 541 B1**

Il est rappelé que: Dans un délai de neuf mois à compter de la date de publication de la mention de la délivrance du brevet europeen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention concerne une tête de dosage électrochimique pour la détection d'une substance susceptible de subir une réaction électrochimique, formée par réaction enzymatique d'une substance organique en solution, à électrode de mesure en platine et électrode de référence à l'argent et au chlorure d'argent, constituées par des dépôts de faible épaisseur obtenus par sérigraphie d'encres à base, d'une part, de poudre de platine et de poudre de verre, d'autre part de poudre d'argent et de poudre de verre, puis cuisson, sur un support inerte en oxyde céramique fritté, soit poreux, soit non poreux, et dépôt de chlorure d'argent sur l'électrode à l'argent, une membrane en verre ou vitrocéramique poreux étant alors disposée sur l'électrode de platine, un silane étant greffé sur le support ou la membrane poreux, puis activé, et au moins un enzyme catalysant la réaction de la substance organique en solution étant ensuite greffé sur le silane.

Le document FR-A-2 335 842 décrit un appareil de détection en solution d'une substance susceptible de subir une réaction électrochimique, telle que le glucose, à l'aide d'un ensemble polarographique comprenant une électrode à membrane contenant un enzyme, tel que la glycose-oxydase, faisant appel à un dosage de l'eau oxygénée formée par oxydation.

Le document US-A-3 929 609 porte sur un procédé et un appareil de dosage électrochimique d'une substance en solution, l'appareil comprenant une électrode en métal précieux pulvérulent et verre pulvérulent frittés par chauffage, après dépôt sérigraphique du métal précieux sur le verre fritté.

Il est décrit dans la publication de O.R. Zaborsky "Immobilized enzymes', 1974, p. 12 - 18, CRC-Press, Cleveland, US, des dispositifs de dosage électrochimique en solution utilisant des électrodes en verre poreux aminoalkylé ou aminoarylé, un enzyme catalysant une réaction organique en solution étant greffé sur l'électrode poreuse.

Il est nécessaire d'apporter dans la fabrication de telles têtes de dosage à électrodes massives beaucoup de soins, difficilement compatibles avec une fabrication industrielle, si l'on veut obtenir une bonne sensibilité, une bonne reproductibilité des résultats et un temps de réponse suffisamment court.

La présente invention a pour but de procurer une tête de dosage électrochimique de fabrication facile, donnant des résultats bien reproductibles, avec une bonne précision et un temps de réponse court.

La tête de dosage selon l'invention est caractérisée en ce que son électrode de platine est formée d'une pluralité d'électrodes élémentaires, séparées par des éléments isolants et reliées par une couche arrière continue de platine.

De préférence, les électrodes élémentaires et les éléments isolants ont une épaisseur de 10 à quelques dizaines de micromètres. Ces électrodes et ces éléments isolants sont avantageusement déposés par la technique des masques complémentaires.

De telles têtes de dosage sont applicables en particulier à la détection de l'eau oxygénée fournie par réaction enzymatique d'une substance en solution, et notamment au dosage en solution du glucose ou d'un sucre convertible en glucose.

Le principe de ce dosage est le suivant:

a) réaction enzymatique,
$\beta$- D glucose $+ O_2 + H_2O \rightarrow H_2O_2 +$ acide gluconique réaction catalysée par la $\beta$ - D glucose-oxydase

b) réaction électrochimique à l'électrode du platine,
$H_2O_2 \rightarrow 2H^+ + O_2 + 2e^-$

Dans le cas du dosage d'un autre sucre convertible en glucose, il faut faire appel en premier lieu à au moins un autre enzyme catalysant cette conversion.

De préférence, on active le support, après greffage du silane, par réaction de celui-ci avec une solution du glutaraldéhyde de pH tamponné à environ 7.

Au cours de la fabrication, lorsque les températures de cuisson des dépôts sérigraphiés peuvent être les mêmes, on effectue successivement les dépôts par sérigraphie sur le ou les supports et l'évaporation des solvants correspondants du platine, de l'argent et de l'isolant, puis l'on effectue la cuisson des depôts simultanément.

Si l'on doit recourir à des températures de cuisson différentes, on a avantage à effectuer successivement chaque dépôt par sérigraphie sur le ou les supports, suivi de l'évaporation des solvants, de la pyrolyse des liants et de la cuisson du dépôt correspondant.

Il est décrit ci-après, à titre d'exemple et en référence à la figure unique du dessin annexé, une tête de dosage électrochimique du glucose selon l'invention et un procédé de fabrication.

Dans la figure, le support 31 en alumine frittée, d'une épaisseur d'environ 0,5 mm à 1 mm, est revêtu sur le pourtour de la surface destinée à venir en contact avec la solution à doser d'un dépôt d'argent 32 obtenu par sérigraphie, puis oxydé anodiquement et traité par une solution de chlorure de potassium pour obtenir une couche superficielle de chlorure d'argent 33. Il est muni au centre d'une électrode de platine divisée en éléments tels que 34A, 34B, 34C, 34D, séparés par des éléments isolants 35A, 35B, 35C. Les électrodes élémentaires sont reliées entre elles à l'arrière par une couche continue de platine 36. Leur épaisseur, ainsi que celle des éléments isolants, est de quelques dizaines de micromètres. La surface de l'électrode d'argent est notablement supérieure à celle de l'électrode

de platine.

Les dépôts de platine et d'argent, ainsi que des éléments isolants, sont obtenus par sérigraphie à travers un écran en toile d'acier inoxydable de maille 74 ou 43 micromètres, d'encres contenant soit de la poudre de platine, soit de la poudre d'argent, additionnées d'une faible quantité (quelques %) de poudre de verre, soit de la poudre de verre, la dimension moyenne des grains de poudre étant de l'ordre du micromètre. Les dépôts des électrodes élémentaires et des éléments isolants se font par la technique des masques complémentaires, bien connue en microélectronique hybride. On procède ensuite à une évaporation du solvant de l'encre, à la pyrolyse du liant organique et au frittage de la poudre. Si l'on peut effectuer les cuissons à la même température, on les réalise simultanément. Dans le cas contraire, on commence par la cuisson de l'encre dont la température de cuisson est la plus élevée. Par exemple, en ce qui concerne les cuissons respectives de l'encre au platine et de l'encre à l'argent, on effectue le dépôt de l'encre au platine, on la soumet à une cuisson pendant 5 minutes à 850° C. Puis on effectue le dépôt de l'encre à l'argent, que l'on cuit 5 minutes à 750° C.

La formation du dépôt de chlorure d'argent sur l'électrode à l'argent s'effectue de manière connue en soumettant l'électrode à l'argent à une oxydation anodique, puis en la mettant en contact avec une solution de chlorure de potassium.

On réalise le greffage de l'enzyme comme suit:

On fait réagir la membrane poreuse avec une solution de silane (en proportions respectives de 18 $cm^3$ d'eau distillée et 2 $cm^3$ de β-aminopropyltriéthoxysilane), le pH étant ajusté à 3,4 à l'aide d'acide chlorhydrique 6N. On maintient pendant 1h à la température ambiante. On retire la tête de mesure du bain, la lave à l'eau distillée et la sèche à 115° C pendant 1h; le silane est ainsi greffé.

On active alors le silane greffé à l'aide de glutaraldéhyde, en faisant réagir une fonction aldéhyde sur la fonction amine du silane, selon la réaction

```
 |
 O
 |
O-Si (CH2)3 NH2 + O=CH (CH2)3 - CHO
 |
 O
 |
```

```
 |
 O
 |
O-Si (CH2)3 N=CH (CH2)3 CHO
 |
 O
 |
```

A cet effet, on met en contact la membrane silanisée avec une solution de glutaraldéhyde à 2,5 % dans 10 $cm^3$ de tampon $Na_2HPO_4$ à 0,05 M et au pH 7. Le traitement est effectué à température ambiante pendant au moins une heure. On rince à l'eau distillée.

Le greffage de l'enzyme est ensuite effectué en mettant la membrane poreuse traitée en contact avec une solution d'enzyme dans de l'eau distillée, préalablement refroidie à 4° C. Avec de la β-D-glucose-oxydase à 250 unités par mg, on dissout 5 mg d'enzyme dans 0,5 $cm^3$ d'eau distillée. Le greffage est effectué pendant 24 heures à 4° C.

La tête de mesure ainsi préparée n'est pas séchée. On le conserve à 4° C au réfrigérateur dans un tampon acétate à pH 5,8.

## Revendications

1. Tête de dosage électrochimique pour la détection d'une substance susceptible de subir une réaction électrochimique, formée par réaction enzymatique d'une substance organique en solution, à électrode de mesure en platine et électrode de référence à l'argent et au chlorure d'argent, constituées par des dépôts de faible épaisseur obtenus par sérigraphie d'encres à base, d'une part, de poudre de platine et de poudre de verre, d'autre part de poudre d'argent et de poudre de verre, puis cuisson, sur un support inerte en oxyde céramique fritté, soit poreux, soit non poreux, et dépôt de chlorure d'argent sur l'électrode à l'argent, une membrane en verre ou vitrocéramique poreux étant alors disposée sur l'électrode de platine, un silane étant greffé sur le support ou la membrane poreuse, puis activé, et au moins un enzyme catalysant la réaction de la substance organique en solution étant ensuite greffé sur le silane,

caractérisée en ce que l'électrode de platine est formée d'une pluralité d'électrodes élémentaires (34A, 34B, 34C, 34D) séparées par des éléments isolants (35A, 35B, 35C) et reliées par une couche (36) arrière continue de platine.

2. Tête de dosage selon la revendication 1, caractérisée en ce que les électrodes élémentaires et les éléments isolants ont une épaisseur de 10 à quelques dizaines de micromètres.

3. Tête de dosage selon les revendications 1 ou 2, caractérisée en ce que les électrodes élémentaires et les éléments isolants ont été déposés par la technique des masques complémentaires.

## Patentansprüche

1. Elektrochemischer Dosierkopf zum Aufspüren einer Substanz, welche einer elektrochemischen Reaktion unterworfen werden kann, die aus der enzymatischen Reaktion einer in Lösung befindlichen organischen Substanz besteht, mit einer Meßelektrode aus Platin und einer Bezugselektrode aus Silber und Silberchlorid, die aus Schichten geringer Stärke bestehen, die erzeugt werden durch Siebdruck mit Farben auf der Basis von Platinpulver und Glaspulver einerseits, und Silberpulver und Glaspulver andererseits, durch anschließendes Brennen auf einer inerten Unterlage aus gesinterter, poröser oder nichtporöser Oxidkeramik, und durch Abscheiden von Silberchlorid auf der Silberelektrode, wonach eine poröse Glasmembran oder eine poröse glaskeramische Membran über die Platinelektrode gebracht wird, ein Silan auf die Unterlage oder die poröse Membran gepfropft und dann aktiviert wird, und mindestens ein Enzym anschließend auf das Silan gepfropft wird, welches die Reaktion der in Lösung befindlichen organischen Substanz katalysiert, dadurch gekennzeichnet, daß die Platinelektrode aus einer Vielzahl von Elementen (34A, 34B, 34C, 34D) gebildet ist, die durch Isolierelemente (35A, 35B, 35C) voneinander getrennt und durch eine hintere, durchgehende Schicht (36) aus Platin verbunden sind.

2. Dosierkopf nach Anspruch 1, dadurch gekennzeichnet, daß die Elementarelektroden und die Isolierelemente eine Dicke von 10 bis einige zehn Mikrometer besitzen.

3. Dosierkopf nach den Ansprüchen 1 oder 2, dadurch gekennzeichnet, daß die Elementarelektroden und die Isolierelemente durch Anwendung der komplementären Maskentechnik aufgebracht sind.

## Claims

1. An electrochemical measuring head with a platinum measuring electrode and a silver and silver chloride reference electrode for detecting a substance capable of being subjected to an electrochemical reaction constituted by an enzymatic reaction of an organic substance in solution, the electrodes being constituted by thin deposits obtained by screen printing inks based firstly on platinum powder with glass powder and secondly on silver powder with glass powder, the inks being printed on an inert support of porous or non-porous sintered ceramic oxide, the printing being followed by baking, silver chloride then being deposited on the silver electrode, a porous glass or vitro-ceramic membrane then being disposed on the platinum electrode, a silane then being grafted on the support or on the porous membrane, and then being activated, and at least one enzyme for catalyzing the reaction of the organic substance in solution then being grafted on the silane,

characterized in that the platinum electrode is constituted by a plurality of elementary electrodes (34A, 34B, 34C, 34D) separated by insulating elements (35A, 35B, 35C) and interconnected by a continuous rear layer (36) of platinum.

2. A measuring head according to claim 1, characterized in that the elementary electrodes and the insulating elements have a thickness of 10 micrometers to a few tens of micrometers.

3. A measuring head according to claim 1 or 2, characterized in that the elementary electrodes and the insulating elements are deposited by the complementary mask technique.

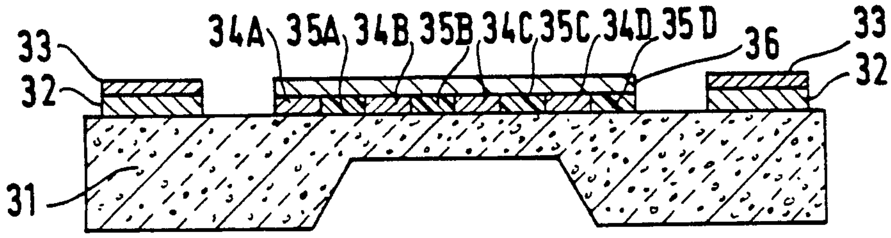
33
32
31
34A
35A
34B
35B
34C
35C
34D
35 D
36
33
32